# EUROPÄISCHE PATENTSCHRIFT

(11) **EP 1 923 286 B1**
(45) Veröffentlichungstag und Bekanntmachung des Hinweises auf die Patenterteilung: **27.07.2011**
(21) Anmeldenummer: 07022080.1
(22) Anmeldetag: 14.11.2007
(51) Int. Cl.: B60T 17/22, B60T 13/68, B60T 7/08

(54) **Elektronisches Bremssystem für ein Nutzfahrzeug und Verfahren zum Steuern eines elektronischen Bremssystems**
Electronic braking system for a commercial vehicle and method for controlling an electronic braking system
Système de freinage électronique pour un véhicule utilitaire et procédé de commande d'un système de freinage électronique

(30) Priorität: 16.11.2006 DE 102006054432; 06.09.2007 DE 102007042316
(43) Veröffentlichungstag der Anmeldung: 21.05.2008
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A1- 1 504 975
- EP-A2- 1 531 100
- EP-A2- 1 719 677
- DE-A1- 3 407 660
- DE-A1- 19 857 393

## Beschreibung

Die Erfindung betrifft ein elektronisches Bremssystem für ein Nutzfahrzeug mit pneumatischer Bremsanlage und Zugfahrzeug sowie Anhänger, mit einer elektrisch ansteuerbaren Testventileinrichtung, die geeignet ist, einen pneumatischen Steuereingang einer Anhängersteuerventileinrichtung unabhängig von einer Be- oder Entlüftung von Federspeicherzylindern des Zugfahrzeugs zu be- oder entlüften.

Die Erfindung betrifft weiterhin ein Verfahren zum Steuern und/oder Regeln eines elektronisches Bremssystems für ein Nutzfahrzeug mit pneumatischer Bremsanlage und Zugfahrzeug sowie Anhänger, mit einer elektrisch ansteuerbaren Testventileinrichtung, die zur Durchführung eines Bremsentests einen pneumatischen Steuereingang einer Anhängersteuerventileinrichtung bei entlüfteten Federspeicherzylindern des Zugfahrzeugs belüftet.

Ein derartiges Bremssystem und ein derartiges Verfahren sind z.B. aus der EP 1 504 975 A1 bekannt.

Pneumatische Bremsanlagen von Nutzfahrzeugen werden in zunehmendem Maße elektronisch gesteuert. Dies betrifft auch die Feststellbremsanlagen, die durch den Einsatz von Federspeicherzylindern realisiert sind, sowie Sonderfunktionen der Bremsanlagen, wie etwa eine Testfunktion und eine Streckbremsfunktion. Die Testfunktion wird durch ein Ventil realisiert, das in der Lage ist, die Bremswirkung des Anhängers aufzuheben, um so zu testen, ob die Entlüftung der Federspeicherzylinder des Zugfahrzeugs ausreicht, um das gesamte Nutzfahrzeug zu halten. Die Streckbremsfunktion dient insbesondere der sicheren Bergabfahrt, nämlich durch Bremsung eines Anhängers, um einen Nutzfahrzeugzug auf Gefällestrecken gestreckt zu halten. Beide Funktionen werden üblicherweise durch pneumatische Ventile gesteuert, die im Führerhaus des Nutzfahrzeugs angeordnet sind und somit dem Fahrzeugführer zum Zwecke der Bedienung zur Verfügung stehen.

Problematisch an dieser herkömmlichen Lösung ist die Notwendigkeit einer Bereitstellung von hierfür vorgesehenen Druckluftleitungen, die in die Fahrerkabine hineinreicht.

EP 1 719 677 offenbart ein Bremssystem für eine Zugfahrzeug-Anhängerkombination mit einer Streckbremsfunktion wobei ein elektro-pneumatischer Wandler einer Anhängersteuerventileinrichtung vorgeschaltet ist.

Der Erfindung liegt die Aufgabe zugrunde, eine Streckbremsfunktion zur Verfügung zu stellen, ohne dass die Notwendigkeit einer hierfür in die Fahrerkabine hineinreichende Druckluftleitung besteht.

Diese Erfindung wird mit den Merkmalen der unabhängigen Ansprüche 1 und 9 gelöst.

Vorteilhafte Weiterbildungen der Erfindungen sind in den abhängigen Ansprüchen angegeben.

Die Erfindung baut auf dem elektronischen Bremssystem dadurch auf, dass der Testventileinrichtung eine elektrisch ansteuerbare Streckbremsventileinrichtung in Reihe nachgeschaltet ist, die in einem ersten Schaltzustand einen von der Testventileinrichtung zur Verfügung gestellten Steuerdruck an den pneumatischen Steuereingang der Anhängersteuerventileinrichtung weitergibt und in einem zweiten Schaltzustand den Steuereingang der Anhängersteuerventileinrichtung entlüftet. Auf diese Weise kann die Streckbremsfunktion auf der Grundlage einer elektrischen Ansteuerung erfolgen. Diese kann beispielsweise unter Vermittlung der Steuereinheit einer elektronischen Feststellbremse realisiert sein. Die Streckbremsventileinrichtung wird dem Testventil nachgeschaltet, das in bekannten Steuerungen der Feststellbremse vorhanden ist. Die Steuerung benötigt somit keinen weiteren Druckluftausgang, um die Streckbremsfunktion zu realisieren. Die Streckbremsventileinrichtung kann beispielsweise an das Gehäuse der Feststellbremsensteuerung oder an das Gehäuse einer Luftaufbereitungsanlage angeflanscht werden.

Die Erfindung ist nützlicherweise dadurch weitergebildet, dass die Testventileinrichtung und die Streckbremsventileinrichtung jeweils elektrisch ansteuerbare 3/2-Wegeventile mit Federrückstellung sind. Derartige Ventileinrichtungen erfüllen die für die Testfunktion und die Streckenbremse erforderliche Funktionalität.

Es ist bevorzugt, dass sich die Streckbremsventileinrichtung unbestromt in ihrem ersten Schaltzustand befindet. Dieser erste Schaltzustand, bei dem die Streckbremse nicht aktiviert wird, liegt während des überwiegenden Teils der Betriebsdauer des Nutzfahrzeugs vor, da die Streckbremse nur selten aktiviert wird. Außerdem wird die Streckbremsventileinrichtung durch diese Schaltlogik bei Stromausfall in eine sichere Position gebracht, nämlich diejenige, bei der die Streckbremse nicht aktiv ist; eine unbeabsichtigt aktive Streckbremse könnte ansonsten zu gefährlichen Fahrsituationen führen.

Die Erfindung ist in besonders nützlicher Weise dadurch weitergebildet, dass der Streckbremsventileinrichtung ein 2/2-Wege-Halteventil mit Federrückstellung in Reihe nachgeschaltet ist, das in einem ersten Schaltzustand den von der Testventileinrichtung und der Streckbremsventileinrichtung zur Verfügung gestellten Steuerdruck an den pneumatischen Steuereingang der Anhängersteuerventileinrichtung weitergibt und in einem zweiten Schaltzustand den Druck am Steuereingang der Anhängersteuerventileinrichtung hält. Durch ein solches 2/2-Wege-Halteventil kann eine gestufte Entlüftung des Steuereingangs stattfinden, was eine besonders feinfühlige Streckbremsung zulässt.

Weiterhin ist von Vorteil, dass das 2/2-Wege-Halteventil elektrisch ansteuerbar ist und sich unbestromt in seinem ersten Schaltzustand befindet. Das 2/2-Wege-Halteventil wird also nur in den seltenen Fällen bestromt, wenn eine kurzzeitige Unterbrechung der Entlüftung gewünscht ist.

Die Erfindung ist in besonders vorteilhafter Weise dadurch weitergebildet, dass eine elektrische Handsteuereinheit vorgesehen ist, wobei in einer ersten Schaltstellung der Handsteuereinheit Federspeicherzylinder des Zugfahrzeugs und der Steuereingang der Anhängersteuerventileinrichtung entlüftet werden, in einer zweiten Schaltstellung der Handsteuereinheit Federspeicherzylinder des Zugfahrzeugs entlüftet und der Steuereingang der Anhängersteuerventileinrichtung belüftet werden und in einer dritten Schaltstellung der Handsteuereinheit Federspeicherzylinder des Zugfahrzeugs belüftet und der Steuereingang der Anhängersteuerventileinrichtung entlüftet werden. Durch eine derartige Handsteuereinheit können somit ein Zuspannen der Feststellbremse, ein Testen der Feststellbremse und das Herbeiführen einer Streckbremsung realisiert werden.

Von Vorteil ist, dass die dritte Schaltstellung ein diskretes oder kontinuierliches Spektrum an untergeordneten Schaltstellungen aufweist, wobei das Druckniveau des Steuereingangs der Anhängersteuerventileinrichtung von der Wahl einer untergeordneten Schaltstellung abhängt. Eine solche Funktion ist im einfachsten Fall dadurch verwirklicht, dass die Handsteuereinheit einen Potentiometerschalter enthält, wobei das Maß der Entlüftung von der Stellung des Potentiometers abhängt.

Ebenfalls kann nützlich sein, dass die Dauer der Einnahme der dritten Schaltstellung das Druckniveau des Steuereingangs der Anhängersteuerventileinrichtung beeinflusst. Neben der durch ein Potentiometer realisierten wegabhängigen Steuerung kann somit auch eine zeitabhängige Steuerung stattfinden.

Die Erfindung baut auf dem gattungsgemäßen Verfahren dadurch auf, dass der Testventileinrichtung eine elektrisch ansteuerbare Streckbremsventileinrichtung in Reihe nachgeschaltet ist, die in einem ersten Schaltzustand eine von der Testventileinrichtung zur Verfügung gestellten Steuerdruck an den pneumatischen Steuereingang der Anhängersteuerventileinrichtung weitergibt und in einem zweiten Schaltzustand den Steuereingang der Anhängersteuerventileinrichtung entlüftet. Hierdurch werden die Vorteile und Besonderheiten des erfindungsgemäßen elektronischen Bremssystems auch im Rahmen eines Verfahrens realisiert. Dies gilt auch für die nachfolgend angegebenen besonders bevorzugten Ausführungsformen der Erfindung.

Das Verfahren ist besonders nützlich dadurch weitergebildet, dass die Testventileinrichtung und die Streckbremsventileinrichtung jeweils elektrisch ansteuerbare 3/2-Wegeventile mit Federrückstellung sind.

Ebenfalls ist es nützlich, dass sich die Streckbremsventileinrichtung unbestromt in ihrem ersten Schaltzustand befindet.

Das Verfahren erweist sich dadurch als besonders vorteilhaft, dass der Streckbremsventileinrichtung ein 2/2-Wege-Halteventil mit Federrückstellung in Reihe nachgeschaltet ist, das in einem ersten Schaltzustand den von der Testventileinrichtung und der Streckbremsventileinrichtung zur Verfügung gestellten Steuerdruck an den pneumatischen Steuereingang der Anhängersteuerventileinrichtung weitergibt und in einem zweiten Schaltzustand den Druck am Steuereingang der Anhängersteuerventileinrichtung hält.

Ebenfalls ist von Vorteil, dass das 2/2-Wege-Halteventil elektrisch ansteuerbar ist und sich unbestromt in seinem ersten Schaltzustand befindet.

Die Steuerung des elektronischen Bremssystems wird in besonders nützlicher Weise dadurch verbessert, dass das elektronische Bremssystem durch eine Handsteuereinheit gesteuert wird, wobei in einer ersten Schaltstellung der Handsteuereinheit Federspeicherzylinder des Zugfahrzeugs und der Steuereingang der Anhängersteuerventileinrichtung entlüftet werden, in einer zweiten Schaltstellung der Handsteuereinheit Federspeicherzylinder des Zugfahrzeugs entlüftet und der Steuereingang der Anhängersteuerventileinrichtung belüftet werden und in einer dritten Schaltstellung der Handsteuereinheit Federspeicherzylinder des Zugfahrzeugs belüftet und der Steuereingang der Anhängersteuerventileinrichtung entlüftet werden.

Weiterhin kann vorgesehen sein, dass die dritte Schaltstellung ein diskretes oder kontinuierliches Spektrum an untergeordneten Schaltstellungen aufweist, wobei das Druckniveau des Steuereingangs der Anhängersteuerventileinrichtung von der Wahl einer untergeordneten Schaltstellung abhängt.

Alternativ oder zusätzlich kann vorgesehen sein, dass die Dauer der Einnahme der dritten Schaltstellung das Druckniveau des Steuereingangs der Anhängersteuerventileinrichtung beeinflusst.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung eines erfindungsgemäßen elektronischen Bremssystems;
- Figur 2: eine schematische Darstellung einer ersten Ausführungsform einer Handsteuereinheit;
- Figur 3: eine schematische Darstellung einer zweiten Ausführungsform einer Handsteuereinheit und
- Figur 4: eine weitere schematische Darstellung eines erfindungsgemäßen elektronischen Bremssystems sowie dessen Einbindung in ein Nutzfahrzeug.

Bei der nachfolgenden Beschreibung der Zeichnungen bezeichnen gleiche Bezugszeichen gleiche oder vergleichbare Komponenten.

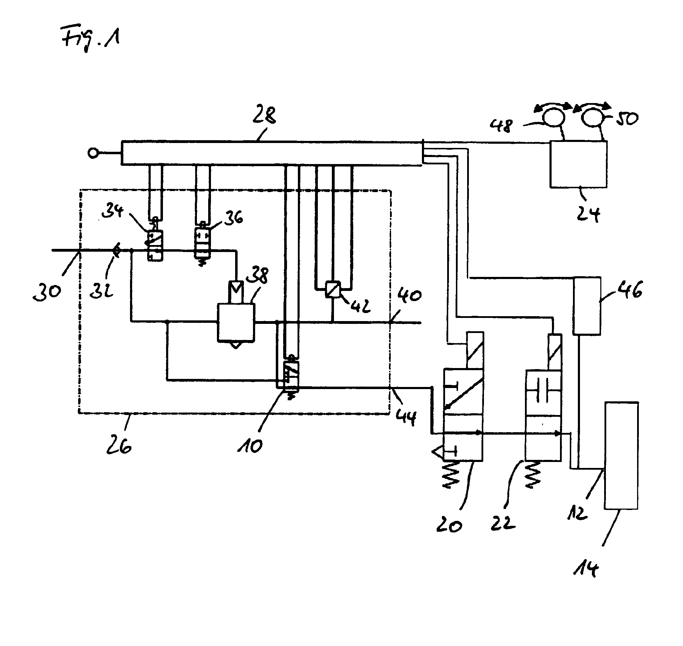

Figur 1 zeigt eine schematische Darstellung eines erfindungsgemäßen elektronischen Bremssystems. Das elektronische Bremssystem, welches insbesondere zur Realisierung von Feststellbremsfunktionen vorgesehen ist, umfasst eine Ventileinheit 26 und eine davon getrennte oder damit integrierte elektronische Steuereinheit 28. Die Ventileinheit 26 weist einen Eingangsanschluss 30 auf, dem Druckluft zuführbar ist. Die Druckluft gelangt über ein Rückschlagventil 32 zu einem 3/2-Wegeventil 34, das insbesondere als bistabiles Magnetventil ausgelegt sein kann. Auch ein Magnetventil mit Federrückstellung kann an dieser Stelle zum Einsatz kommen. Dem 3/2-Wegeventil ist ein 2/2-Wegeventil 36 nachgeschaltet, welches als Ventil mit Federrückstellung ausgelegt ist. Über die Ventile 34, 36 wird ein Relaisventil 38 angesteuert. Durch das Relaisventil 38 wird Druckluft gesteuert, die stromabwärts des Rückschlagventils 32 abgezweigt wird. Die so gesteuerte Druckluft kann über einen Druckluftausgang 40 hier nicht dargestellten Federspeicherzylindern zu deren Belüftung zugeführt werden. Dies geschieht, wenn der Steuereingang des Relaisventils 38 belüftet wird. Wird der Steuereingang des Relaisventils 38 nicht angesteuert, so kann das Relaisventil 38 die Federspeicherzylinder über den Druckluftausgang 40 entlüften. Der Druck am Druckluftausgang 40 wird über einen Drucksensor erfasst. Die Ventileinheit 26 enthält ein weiteres 3/2-Wegeventil 10 mit Federrückstellung, das eine Testventileinrichtung darstellt. Die Testventileinrichtung 10 steht mit einem weiteren Druckluftausgang 44 in Verbindung, dem im unbestromten Zustand der Testventileinrichtung 10 der von dem Relaisventil 38 durchgesteuerte Druck zugeführt wird. Wird die Testventileinrichtung 10 durch Bestromen umgeschaltet, so wird der eingangsseitig des Relaisventils 38 anstehende Druck dem Druckluftausgang 44 zugeführt, was insbesondere bei entlüftendem Relaisventil 38 zu unterschiedlichen Drücken an den beiden Druckluftausgängen 40, 44 führt. Dem Druckluftausgang 44 nachgeschaltet ist eine Streckbremsventileinrichtung 20, die ebenfalls als 3/2-Wegeventil mit Federrückstellung ausgebildet ist. Wiederum der Streckbremsventileinrichtung 20 nachgeschaltet ist ein 2/2-Wege-Halteventil 22. Im unbestromten Zustand lassen diese Ventile 20, 22 den von der Testventileinrichtung 10 gelieferten Steuerdruck passieren, so dass dieser dem Steuereingang 12 einer Anhängersteuerventileinrichtung 14 zugeführt werden kann. Der am Steuereingang 12 anliegende Steuerdruck wird von einem Drucksensor 46 erfasst. Die Signale aller Sensoren 42, 46 werden der Steuereinheit 28 zugeführt, und alle beteiligten steuerbaren Ventile 10, 20, 22, 34, 36, 38 werden unmittelbar oder mittelbar durch die Steuereinheit 28 gesteuert. Die Erfassung des Drucks durch den Drucksensor 46 ermöglicht eine Druckregelung der Streckbremsfunktion. Ebenfalls ist es möglich, auf den Drucksensor 46 zu verzichten. In diesem Fall wird die Streckbremsung gesteuert, insbesondere in gestufter Weise. Die Steuereinheit 28 steht weiterhin mit einer Handsteuereinheit 24 in Verbindung, die die für die im vorliegenden Zusammenhang interessierenden Funktionen entsprechenden elektrischen Signale an die elektronische Steuereinheit 28 ausgibt, das heißt insbesondere im Hinblick auf die Feststellbremsfunktion, die Testfunktion und die Streckbremsfunktion.

Befinden sich die Ventile 34, 36 in ihrer dargestellten Schaltstellung, so ist die Feststellbremse des Nutzfahrzeugs gelöst. Soll die Feststellbremse gespannt werden, so wird die Handsteuereinheit 24 aus ihrer Grundstellung in eine erste Schaltstellung überführt, in dem zum Beispiel das Bedienelement 48 teilweise umgelegt wird. Hierdurch wird das 3/2-Wegeventil umgeschaltet, was eine Entlüftung des Steuereingangs des Relaisventils 38 zur Folge hat. Folglich werden der Druckluftausgang 40 und somit die daran angeschlossenen Federspeicherzylinder über das Relaisventil 38 entlüftet. Auch der Druckluftausgang 44 ist in diesem Zustand entlüftet, was eine Entlüftung des Steuereingangs 12 der Anhängersteuerventileinrichtung 14 zur Folge hat. Folglich wird auch der Anhänger gebremst. Soll getestet werden, ob der gesamte Nutzfahrzeugzug auch allein durch die Feststellbremse des Zugfahrzeugs gehalten werden kann, kann beispielsweise durch weiteres Umlegen des Bedienelementes 48 die Ansteuereinheit 24 in eine zweite Schaltstellung überführt werden, was ein Umschalten der Testventileinrichtung 10 herbeiführt. Folglich wird dem Druckluftausgang 44 unter Umgehung des Relaisventils 38 Druckluft zugeführt, so dass der Steuereingang 12 der Steuerventileinrichtung 14 belüftet wird. Dies hat ein Lösen der Anhängerbremse zur Folge. Eine dritte Schaltstellung der Handsteuereinheit 24 ist in Fahrbetrieb des Nutzfahrzeugs interessant. Zu diesem Zweck wird beispielsweise das Bedienelement 50 umgelegt, was zu einem Umschalten der als 3/2-Wegeventil ausgelegten Streckbremsventileinrichtung 20 führt. Da ein solches Umschalten eine Entlüftung des Steuereingangs 12 der Anhängersteuerventileinrichtung 14 nach sich zieht, wird der Anhänger während der Fahrt gebremst. Bei Gefälle kann somit eine Streckung des Nutzfahrzeugzugs erfolgen. Das Maß dieser Bremsung kann durch den Weg, um den das Bedienelement 50 umgelegt wird, und/oder die Zeitdauer des Umlegens festgelegt werden. Zur feinfühligen Abstufung der Entlüftung kann das 2/2-Wege-Halteventil 22 dienen, da dieses ohne erneute Belüftung des Steuereingangs 12 der Anhängersteuerventileinrichtung 14 ein Unterbrechen der Entlüftung des Steuereingangs 12 herbeiführen kann.

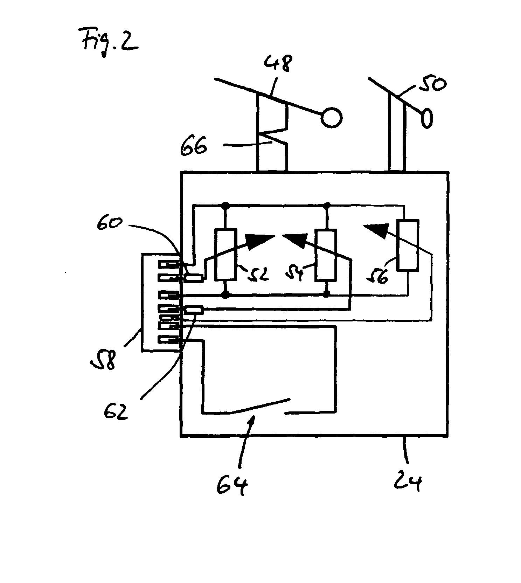

Figur 2 zeigt eine schematische Darstellung einer ersten Ausführungsform einer Handsteuereinheit. Die Ansteuereinheit 24 ist mit zwei Bedienelementen 48, 50 ausgestattet. Weiterhin ist eine Schnittstelle 58 vorgesehen, über die die Handsteuereinheit 24 mit der Steuereinheit 28 (siehe Figur 1) der elektronischen Feststellbremse oder auch mit der Steuereinheit einer elektronischen Luftaufbereitungsanlage (EAC) verbunden sein kann. Die Schnittstelle 58 kann auch für die Kommunikation mit anderen Steuergeräten oder für die direkte Verbindung mit dem CAN-Bus des Fahrzeugs ausgelegt sein. Innerhalb der Ansteuereinheit 24 sind in üblicher Weise ausgelegte Potentiometerschaltungen vorgesehen. Zwei Potentiometer 52, 54 werden bei Betätigung des linken Bedienelementes 48 verstellt. Im Normalfall geben die Potentiometer 52, 54 gleichwertige Ausgangssignale aus, so dass durch Überwachen und Vergleichen der beiden Ausgangssignale eine Fehlererkennung stattfinden kann. Ein weiteres Potentiometer 56 wird durch Betätigung des zweiten Bedienelementes 50 verstellt. Es sind weiterhin Widerstände 60, 62 zur Fehlerermittlung und Strombegrenzung vorgesehen. Ferner enthält die Handsteuereinheit eine Schalteinrichtung 64, mit der Aufweckfunktionen im Hinblick auf den Mikroprozessor der mit der Ansteuereinheit 24 verbundenen elektronischen Steuereinheit sowie Plausibilitätsüberprüfungen realisiert werden können.

Bei Betätigung des Bedienelementes 48 wird zunächst die Feststellbremse des Nutzfahrzeugs gespannt. Um diesen Zustand beibehalten zu können, ist das Bedienelement 48 mit einer Verriegelungseinrichtung 66 ausgestattet. Soll ausgehend von diesem Zustand die Testfunktion ausgeführt werden, so wird das Bedienelement 48 weiter betätigt, im Falle eines Tasters beispielsweise durch weiteres Durchdrücken. Dies führt zum Umschalten der Testventileinrichtung 10 (siehe Figur 1), so dass überprüft werden kann, ob das gesamte Nutzfahrzeug durch die Feststellbremse des Zugfahrzeugs gehalten werden kann. Nach Abschluss des Tests, das heißt beispielsweise durch Loslassen des als Taster ausgelegten Bedienelementes 48, kehrt dieses in seine verriegelte Stellung zurück, so dass die Feststellbremse des gesamten Nutzfahrzeuges gespannt ist. Soll die Feststellbremse gelöst werden, so wird die Verriegelung des Bedienelementes 48 aufgehoben, so dass das Bedienelement 48 und die Potentiometer 52, 54 in ihre Ausgangsstellung zurückkehren. Neben der zweistufigen Ausbildung des Bedienelementes 48 ist es auch möglich, die Testfunktion bei jedem Spannen der Feststellbremse automatisch auszuführen. Ein einstufiges Bedienelement ist in diesem Fall ausreichend. Es ist dann auch nicht erforderlich, dass das Bedienelement Potentiometer ansteuert. Im einstufigen Fall können die Potentiometer durch einfache Schalter ersetzt sein. Während des Fahrbetriebs des Nutzfahrzeugs befindet sich das Bedienelement 48 in seiner Ausgangsstellung, das heißt die Feststellbremse ist gelöst. Soll nun beispielsweise bei einer Gefällefahrt das Nutzfahrzeug gestreckt werden, wird das Bedienelement 50 betätigt und somit das Potentiometer 56 verstellt. Demzufolge wird der Steuereingang 12 (siehe Figur 1) der Anhängersteuerventileinrichtung 14 entlüftet, was zu einem Einbremsen des Anhängers führt. Der Grad der Entlüftung und somit die Bremswirkung können dadurch bestimmt werden, dass das Bedienelement 50, wenn dieses als Bedienknopf ausgelegt ist, mehr oder weniger eingedrückt wird und somit das Potentiometer 56 mehr oder weniger verstellt wird. Es liegt folglich eine vom Verstellweg des Bedienelementes 50 abhängige Streckbremssteuerung vor. Alternativ oder zusätzlich kann auch die Zeitdauer, während welcher das Bedienelement 50 betätigt wird, das Maß der Bremswirkung bestimmen. In diesem Fall liegt eine zeitabhängige Steuerung der Streckbremswirkung vor. Die Ausführungsform der Handsteuereinheit 24 gemäß Figur 2 zeichnet sich somit dadurch aus, dass für die Streckbremsfunktion ein eigenes Bedienelement 50 vorgesehen ist, während alle anderen Funktionen, das heißt das eigentliche Spannen der Feststellbremse und die Testfunktion durch ein anderes Bedienelement 48 verwirklicht werden.

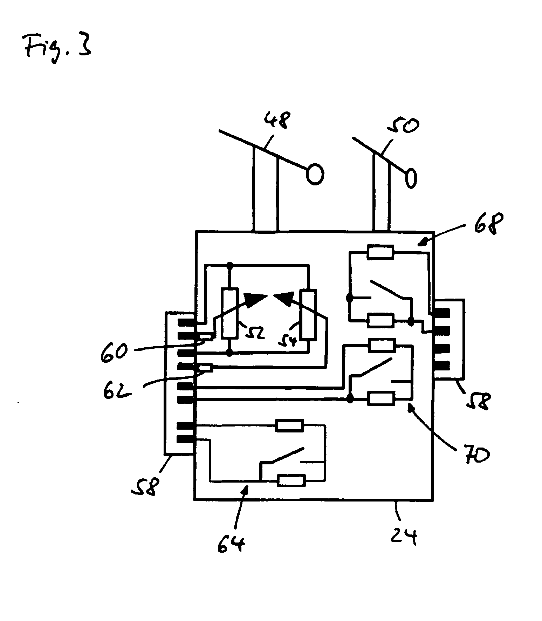

Figur 3 zeigt eine schematische Darstellung einer zweiten Ausführungsform einer Handsteuereinheit. Die hier dargestellte Ansteuereinheit 24 ist in einigen Beziehungen in gleicher Weise wie die Handsteuereinheit 24 gemäß Figur 2 aufgebaut, insbesondere was die von dem Bedienelement 48 gesteuerten Potentiometerschaltungen mit den Potentiometern 52, 54 betrifft. Diesbezüglich wird auf die Ausführungen zur Handsteuereinheit 24 gemäß Figur 2 verwiesen. Allerdings hat das Bedienelement 48 gemäß Figur 3 im Gegensatz zu dem Bedienelement 48 gemäß Figur 2 keine Verriegelungseinrichtung 66. Nach Betätigung des Bedienelementes 48 nimmt dieses daher stets seine Ausgangsposition ein. Gleichwohl bleibt die Feststellbremse gespannt, da dies Schaltungstechnisch oder durch die Software der mit der Ansteuereinheit in Verbindung stehenden elektronischen Steuerung sichergestellt wird. Das Bedienelement 50 hat im vorliegenden Fall zunächst die Aufgabe, ein Lösen der Feststellbremse zu bewirken. Zu diesem Zweck betätigt das Bedienelement 50 zwei Schaltereinrichtungen 68, 70, wobei diese grundsätzlich identische Ausgangssignale liefern, jedoch eine Redundanz im Hinblick auf die Fehlererkennung zur Verfügung stellen. Soll eine Streckbremsung während der Fahrt des Nutzfahrzeugs vollzogen werden, so ist es im Zusammenhang mit der Ansteuereinheit gemäß Figur 3 erforderlich, beide Bedienelemente 48, 50 gleichzeitig zu betätigen.

Die im Zusammenhang mit den Figuren 2 und 3 dargestellten Schaltungen weisen Potentiometer 52, 54, 56 auf. Ebenfalls ist es möglich, andere Schaltelemente zu verwenden, die in der Lage sind, ein kontinuierliches oder gestuftes Ausgangssignalspektrum in Abhängigkeit von der Stellung eines Bedienelementes zur Verfügung zu stellen, beispielsweise Hall-Sensoren.

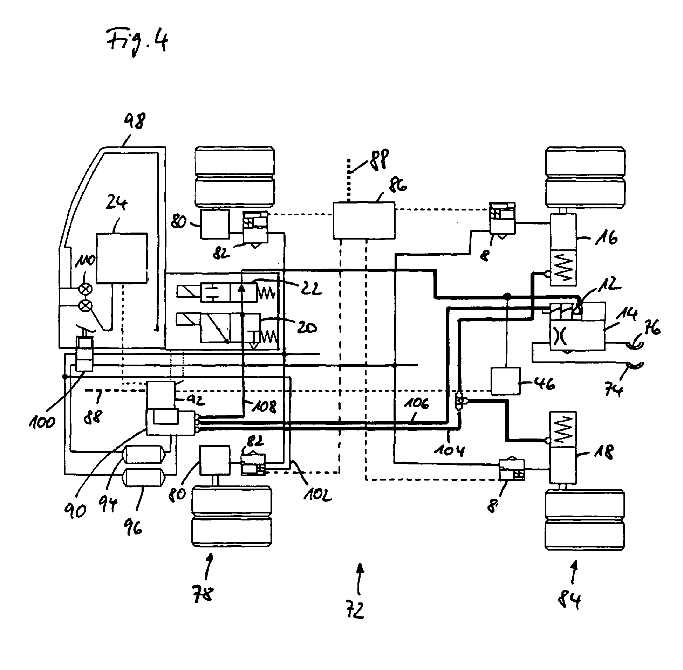

Figur 4 zeigt eine weitere schematische Darstellung eines erfindungsgemäßen elektronischen Bremssystems sowie dessen Einbindung in ein Nutzfahrzeug. Es ist das Zugfahrzeug 72 eines Nutzfahrzeugzuges mit einer Anhängersteuerventileinrichtung 14 sowie einem Versorgungskopf 74 und einem Steuerkopf 76 für die Anhängerkupplung dargestellt. Der Vorderachse 78 des Zugfahrzeugs 72 sind Bremszylinder 80 sowie ABS-Modulatoren 82 zugeordnet. Der Hinterachse 84 sind als Kombizylinder ausgelegte Federspeicherzylinder 16, 18, sowie weitere ABS-Modulatoren 82 zugeordnet. Die ABS-Modulatoren 82 stehen mit einem ABS-Steuergerät 86 in Verbindung, das seinerseits wiederum mit dem CAN-Bus 88 des Nutzfahrzeugs kommuniziert. Es ist weiterhin eine elektronische Druckaufbereitungsanlage 90 (EAC) mit Mehrkreisschutzventil, Druckregler und elektronischer Steuereinheit 92 vorgesehen. Die elektronische Luftaufbereitungsanlage 90 liefert unter anderem Druckluft an die dargestellten Behälter 94, 96 der Betriebsbremskreise, wobei diese Behälter mit dem im Führerhaus 98 angeordneten Betriebsbremsventil 100 in Verbindung stehen. Zwischen einem der Druckluftbehälter 96 und dem Betriebsbremsventil 100 zweigt weiterhin eine ABS-Druckluftleitung 102 ab. Das Betriebsbremsventil 100 liefert Steuerdrücke an die ABS-Modulatoren 82. Es sind ferner drei Druckluftleitungen 104, 106, 108 dargestellt, die an Druckluftausgänge der elektronischen Luftaufbereitungsanlage 90 angeschlossen sind. Die Druckluftleitung 104 führt zu den Federspeicherzylindern 16, 18, die Druckluftleitung 106 führt zur Anhängersteuerventileinrichtung 14 und die Druckluftleitung 108 führt zu einer Streckbremsventileinrichtung 20 mit nachgeschaltetem 2/2-Wege-Halteventil 22. Die von dem 2/2-Wege-Halteventil 22 durchgeleitete Druckluft kann dann dem Steuereingang 12 der Anhängersteuerventileinrichtung 14 zugeführt werden. Der Druck an diesem Steuereingang 12 wird durch den Drucksensor 46 gemessen, wobei das elektrische Drucksignal an die Steuereinheit 92 der Luftaufbereitungsanlage 90 weitergegeben wird. Die Steuereinheit 92 der Luftaufbereitungsanlage 90 steht weiterhin mit dem CAN-Bus 88 des Nutzfahrzeugs sowie mit den Magneten der als 3/2-Wegeventil ausgelegten Streckbremsventileinrichtung 20 sowie des 2/2-Wege-Halteventils 22 zu deren Handsteuerung in Verbindung. Eine weitere elektrische Verbindung führt zu der im Führerhaus 98 angeordneten Handsteuereinheit 24, die somit in der Lage ist, an die Steuereinheit 92 der Luftaufbereitungsanlage 90 Steuersignale auszugeben. Weiterhin steuert die Ansteuereinheit 24 Warn- bzw. Anzeigeeinheiten 110 im Führerhaus 98 an.

Bei dem Ausführungsbeispiel gemäß Figur 4 ist somit vorgesehen, dass die Steuerungsfunktionen der elektronischen Feststellbremse in die Steuereinheit 92 der Luftaufbereitungsanlage 90 integriert sind. Die Steuereinheit 92 übernimmt somit die Aufgaben der in Figur 1 mit dem Bezugszeichen 28 gekennzeichneten Steuereinheit. Ebenso ist die in Figur 1 mit dem Bezugszeichen 26 gekennzeichnete Ventileinheit in die Luftaufbereitungsanlage 90 integriert. Die Streckbremsventileinrichtung 20 sowie das 2/2-Wegehalteventil 22 können von außen an das Ventilgehäuse der Luftaufbereitungseinrichtung 90 angeflanscht werden, wobei die beiden Ventile zu einer einzigen Einheit integriert sein können. Ebenfalls ist es möglich, auch die Ventile 20, 22 in das Ventilgehäuse der Luftaufbereitungseinrichtung 90 zu integrieren.

Bei der Ausführungsform gemäß Figur 4 steht die Handsteuereinheit 24 über eine elektrische Verbindung mit der Steuereinheit 92 der Luftaufbereitungsanlage 90 in Verbindung. Alternativ oder zusätzlich kann auch eine Verbindung zum ABS-Steuergerät 86 hergestellt sein, das dann zumindest die Streckbremsfunktion des Nutzfahrzeugs realisiert. Ebenfalls ist möglich, dass das ABS-Steuergerät 86 ein entsprechendes Signal von der Steuereinheit 92 (beziehungsweise der Steuereinheit 98 gemäß Figur 1) erhält, um auf dieser Grundlage eine Streckbremsung durchzuführen.

### Bezugszeichenliste:

- 10: Testventileinrichtung
- 12: Steuereingang
- 14: Anhängersteuerventileinrichtung
- 16: Federspeicherzylinder
- 18: Federspeicherzylinder
- 20: Streckbremsventileinrichtung
- 22: 2/2-Wege-Halteventil
- 24: Handsteuereinheit
- 26: Ventileinheit
- 28: Steuereinheit
- 30: Drucklufteingang
- 32: Rückschlagventil
- 34: 3/2-Wegeventil
- 36: 2/2-Wegeventil
- 38: Relaisventil
- 40: Druckluftausgang
- 42: Drucksensor
- 44: Druckluftausgang
- 46: Drucksensor
- 48: Bedienelement
- 50: Bedienelement
- 52: Potentiometer
- 54: Potentiometer
- 56: Potentiometer
- 58: Schnittstelle
- 60: Widerstand
- 62: Widerstand
- 64: Schalteinrichtung
- 66: Verriegelungseinrichtung
- 68: Schaltereinrichtung
- 70: Verriegelungseinrichtung
- 72: Zugfahrzeug
- 74: Versorgungskopf
- 76: Steuerkopf
- 78: Vorderachse
- 80: Bremszylinder
- 82: ABS-Modulator
- 84: Hinterachse
- 86: ABS-Steuergerät
- 88: CAN-Bus
- 90: EAC
- 92: Steuereinheit
- 94: Druckluftbehälter
- 96: Druckluftbehälter
- 98: Führerhaus
- 100: Betriebsbremsventil
- 102: ABS-Druckluftleitung
- 104: Druckluftleitung
- 106: Druckluftleitung
- 108: Druckluftleitung
- 110: Warn- bzw. Anzeigeeinheit

## Patentansprüche

1. Elektronisches Bremssystem für ein Nutzfahrzeug mit pneumatischer Bremsanlage und Zugfahrzeug sowie Anhänger, mit einer elektrisch ansteuerbaren Testventileinrichtung (10), die geeignet ist, einen pneumatischen Steuereingang (12) einer Anhängersteuerventileinrichtung (14) unabhängig von einer Be- oder Entlüftung von Federspeicherzylindern (16, 18) des Zugfahrzeugs zu be- oder entlüften, **dadurch gekennzeichnet, dass** der Testventileinrichtung (10) eine elektrisch ansteuerbare Streckbremsventileinrichtung (20) in Reihe nachgeschaltet ist, die in einem ersten Schaltzustand einen von der Testventileinrichtung zur Verfügung gestellten Steuerdruck an den pneumatischen Steuereingang (12) der Anhängersteuerventileinrichtung (14) weitergibt und in einem zweiten Schaltzustand den Steuereingang der Anhängersteuerventileinrichtung entlüftet.

2. Elektronisches Bremssystem nach Anspruch 1, **dadurch gekennzeichnet, dass** die Testventileinrichtung (10) und die Streckbremsventileinrichtung (20) jeweils elektrisch ansteuerbare 3/2-Wegeventile mit Federrückstellung sind.

3. Elektronisches Bremssystem nach Anspruch 2, **dadurch gekennzeichnet, dass** sich die Streckbremsventileinrichtung (20) unbestromt in ihrem ersten Schaltzustand befindet.

4. Elektronisches Bremssystem nach einem der vorhergehenden Ansprüche, **dadurch gekennzeichnet, dass** der Streckbremsventileinrichtung (20) ein 2/2-Wege-Halteventil (22) mit Federrückstellung in Reihe nachgeschaltet ist, das in einem ersten Schaltzustand den von der Testventileinrichtung (10) und der Streckbremsventileinrichtung (20) zur Verfügung gestellten Steuerdruck an den pneumatischen Steuereingang (12) der Anhängersteuerventileinrichtung (14) weitergibt und in einem zweiten Schaltzustand den Druck am Steuereingang der Anhängersteuerventileinrichtung hält.

5. Elektronisches Bremssystem nach Anspruch 4, **dadurch gekennzeichnet, dass** das 2/2-Wege-Halteventil (22) elektrisch ansteuerbar ist und sich unbestromt in seinem ersten Schaltzustand befindet.

6. Elektronisches Bremssystem nach einem der vorhergehenden Ansprüche, **dadurch gekennzeichnet, dass** eine elektrische Handsteuereinheit (24) vorgesehen ist, wobei
- in einer ersten Schaltstellung der Handsteuereinheit (24) Federspeicherzylinder (16, 18) des Zugfahrzeugs und der Steuereingang (12) der Anhängersteuerventileinrichtung (14) entlüftet werden,
- in einer zweiten Schaltstellung der Handsteuereinheit (24) Federspeicherzylinder (16, 18) des Zugfahrzeugs entlüftet und der Steuereingang (12) der Anhängersteuerventileinrichtung (14) belüftet werden und
- in einer dritten Schaltstellung der Handsteuereinheit (24) Federspeicherzylinder (16, 18) des Zugfahrzeugs belüftet und der Steuereingang (12) der Anhängersteuerventileinrichtung (14) entlüftet werden.

7. Elektronisches Bremssystem nach Anspruch 6, **dadurch gekennzeichnet, dass** die dritte Schaltstellung ein diskretes oder kontinuierliches Spektrum an untergeordneten Schaltstellungen aufweist, wobei das Druckniveau des Steuereingangs (12) der Anhängersteuerventileinrichtung (14) von der Wahl einer untergeordneten Schaltstellung abhängt.

8. Elektronisches Bremssystem nach Anspruch 6 oder 7, **dadurch gekennzeichnet, dass** die Dauer der Einnahme der dritten Schaltstellung das Druckniveau des Steuereingangs (12) der Anhängersteuerventileinrichtung (14) beeinflusst.

9. Verfahren zum Steuern und/oder Regeln eines elektronisches Bremssystems für ein Nutzfahrzeug mit pneumatischer Bremsanlage und Zugfahrzeug sowie Anhänger, mit einer elektrisch ansteuerbaren Testventileinrichtung, die zur Durchführung eines Bremsentests einen pneumatischen Steuereingang einer Anhängersteuerventileinrichtung bei entlüfteten Federspeicherzylindern des Zugfahrzeugs belüftet, **dadurch gekennzeichnet, dass** der Testventileinrichtung (10) eine elektrisch ansteuerbare Streckbremsventileinrichtung (20) in Reihe nachgeschaltet ist, die in einem ersten Schaltzustand einen von der Testventileinrichtung (10) zur Verfügung gestellten Steuerdruck an den pneumatischen Steuereingang (12) der Anhängersteuerventileinrichtung (14) weitergibt und in einem zweiten Schaltzustand den Steuereingang der Anhängersteuerventileinrichtung entlüftet.

10. Verfahren nach Anspruch 9, **dadurch gekennzeichnet, dass** die Testventileinrichtung (10) und die Streckbremsventileinrichtung (20) jeweils elektrisch ansteuerbare 3/2-Wegeventile mit Federrückstellung sind.

11. Verfahren nach Anspruch 10, **dadurch gekennzeichnet, dass** sich die Streckbremsventileinrichtung (20) unbestromt in ihrem ersten Schaltzustand befindet.

12. Verfahren nach einem der Ansprüche 9 bis 11, **dadurch gekennzeichnet, dass** der Streckbremsventileinrichtung (20) ein 2/2-Wege-Halteventil (22) mit Federrückstellung in Reihe nachgeschaltet ist, das in einem ersten Schaltzustand den von der Testventileinrichtung (10) und der Streckbremsventileinrichtung (20) zur Verfügung gestellten Steuerdruck an den pneumatischen Steuereingang (12) der Anhängersteuerventileinrichtung (14) weitergibt und in einem zweiten Schaltzustand den Druck am Steuereingang der Anhängersteuerventileinrichtung hält.

13. Verfahren nach Anspruch 12, **dadurch gekennzeichnet, dass** das 2/2-Wege-Halteventil (22) elektrisch ansteuerbar ist und sich unbestromt in seinem ersten Schaltzustand befindet.

14. Verfahren nach einem der vorhergehenden Ansprüche 9 bis 13, **dadurch gekennzeichnet, dass** das elektronische Bremssystem durch eine Handsteuereinheit (24) gesteuert wird, wobei
- in einer ersten Schaltstellung der Handsteuereinheit (24) Federspeicherzylinder (16, 18) des Zugfahrzeugs und der Steuereingang (12) der Anhängersteuerventileinrichtung (14) entlüftet werden,
- in einer zweiten Schaltstellung der Handsteuereinheit (24) Federspeicherzylinder (16, 18) des Zugfahrzeugs entlüftet und der Steuereingang (12) der Anhängersteuerventileinrichtung (14) belüftet werden und
- in einer dritten Schaltstellung der Handsteuereinheit (24) Federspeicherzylinder (16, 18) des Zugfahrzeugs belüftet und der Steuereingang (12) der Anhängersteuerventileinrichtung (14) entlüftet werden.

15. Verfahren nach Anspruch 14, **dadurch gekennzeichnet, dass** die dritte Schaltstellung ein diskretes oder kontinuierliches Spektrum an untergeordneten Schaltstellungen aufweist, wobei das Druckniveau des Steuereingangs (12) der Anhängersteuerventileinrichtung (14) von der Wahl einer untergeordneten Schaltstellung abhängt.

16. Verfahren nach Anspruch 14 oder 15, **dadurch gekennzeichnet, dass** die Dauer der Einnahme der dritten Schaltstellung das Druckniveau des Steuereingangs (12) der Anhängersteuerventileinrichtung (14) beeinflusst.

## Claims

1. Electronic braking system for a commercial vehicle with pneumatic braking and for towing vehicles and trailers, comprising an electrically selectable test valve device (10) suitable for ventilating or venting a pneumatic control input (12) of a trailer control valve device (14) independent of any ventilation or venting of spring brake cylinders (16, 18) of the towing vehicle, **characterised in that** downstream of and in series with the test valve device (10), there is provided an electrically selectable anti-jack-knife brake valve device (20) which, in a first switching state, applies a control pressure made available by the test valve device to the pneumatic control input (12) of the trailer control valve device (14) and, in a second switching state, vents the control input of the trailer control valve device.

2. Electronic braking system according to claim 1, **characterised in that** the test valve device (10) and the anti-jack-knife brake valve device (20) are electrically selectable 3/2-way valves with spring return.

3. Electronic braking system according to claim 2, **characterised in that** the anti-jack-knife brake valve device (20) is currentless in its first switching state.

4. Electronic braking system according to any of the preceding claims, **characterised in that** downstream of and in series with the anti-jack-knife brake valve device (20), there is provided a 2/2-way holding valve (22) with spring return which, in a first switching state, applies the control pressure made available by the test valve device (10) and the anti-jack-knife brake valve device (20) to the pneumatic control input (12) of the trailer control valve device (14) and, in a second switching state, holds the pressure at the control input of the trailer control valve device.

5. Electronic braking system according to claim 4, **characterised in that** the 2/2-way holding valve (22) is electrically selectable and currentless in its first switching state.

6. Electronic braking system according to any of the preceding claims, **characterised in that** an electric manual control unit (24) is provided, wherein
- in a first switching position of the manual control unit (24), spring brake cylinders (16, 18) of the towing vehicle and the control input (12) of the trailer control valve device (14) are vented,
- in a second switching position of the manual control unit (24), spring brake cylinders (16, 18) of the towing vehicle are vented and the control input (12) of the trailer control valve device (14) is ventilated, and
- in a third switching position of the manual control unit (24), spring brake cylinders (16, 18) of the towing vehicle are ventilated and the control input (12) of the trailer control valve device (14) is vented.

7. Electronic braking system according to claim 6, **characterised in that** the third switching position comprises a discrete or continuous spectrum of secondary switching positions, the pressure level of the control input (12) of the trailer control valve device (14) depending on the selection of a secondary switching position.

8. Electronic braking system according to claim 6 or 7, **characterised in that** the duration of the adoption of the third switching position influences the pressure level of the control input (12) of the trailer control valve device (14).

9. Method for the open- and/or closed-loop control of an electronic braking system for a commercial vehicle with pneumatic braking and for towing vehicles and trailers, comprising an electrically selectable test valve device (10) which ventilates a pneumatic control input of a trailer control valve device while the spring brake cylinders of the towing vehicle are vented, in order to perform a brake test, **characterised in that** downstream of and in series with the test valve device (10), there is provided an electrically selectable anti-jack-knife brake valve device (20) which, in a first switching state, applies a control pressure made available by the test valve device (10) to the pneumatic control input (12) of the trailer control valve device (14) and, in a second switching state, vents the control input of the trailer control valve device.

10. Method according to claim 9, **characterised in that** the test valve device (10) and the anti-jack-knife brake valve device (20) are electrically selectable 3/2-way valves with spring return.

11. Method according to claim 10, **characterised in that** the anti-jack-knife brake valve device (20) is currentless in its first switching state.

12. Method according to any of claims 9 to 11, **characterised in that** downstream of and in series with the anti-jack-knife brake valve device (20), there is provided a 2/2-way holding valve (22) with spring return which, in a first switching state, applies the control pressure made available by the test valve device (10) and the anti-jack-knife brake valve device (20) to the pneumatic control input (12) of the trailer control valve device (14) and, in a second switching state, holds the pressure at the control input of the trailer control valve device.

13. Method according to claim 12, **characterised in that** the 2/2-way holding valve (22) is electrically selectable and currentless in its first switching state.

14. Method according to any of claims 9 to 13, **characterised in that** the electronic braking system is controlled by means of a manual control unit (24), wherein
- in a first switching position of the manual control unit (24), spring brake cylinders (16, 18) of the towing vehicle and the control input (12) of the trailer control valve device (14) are vented,
- in a second switching position of the manual control unit (24), spring brake cylinders (16, 18) of the towing vehicle are vented and the control input (12) of the trailer control valve device (14) is ventilated, and
- in a third switching position of the manual control unit (24), spring brake cylinders (16, 18) of the towing vehicle are ventilated and the control input (12) of the trailer control valve device (14) is vented.

15. Method according to claim 14, **characterised in that** the third switching position comprises a discrete or continuous spectrum of secondary switching positions, the pressure level of the control input (12) of the trailer control valve device (14) depending on the selection of a secondary switching position.

16. Method according to claim 14 or 15, **characterised in that** the duration of the adoption of the third switching position influences the pressure level of the control input (12) of the trailer control valve device (14).

## Revendications

1. Système électronique de freinage pour un véhicule utilitaire, ayant un système de freinage pneumatique et un véhicule de traction, ainsi qu'une remorque, comprenant un dispositif (10) de vanne de test, qui peut être commandé électriquement et qui est approprié pour alimenter en air ou purger en air une entrée (12) pneumatique de commande d'un dispositif (14) de vanne de commande de remorque, indépendamment de l'alimentation en air ou de la purge de cylindre (16, 18) à ressort accumulateur du véhicule de traction, **caractérisé en ce qu'**il est monté, en aval en série du dispositif (10) de vanne de test, un dispositif (20) de vanne de frein de maintien en ligne, qui peut être commandé électriquement et qui, dans un premier état de commutation, achemine une pression de commande mise à disposition par le dispositif de vanne de test vers l'entrée (12) de pneumatique de commande du dispositif (14) de vanne de commande de remorque et, dans un deuxième état de commutation, purge l'entrée de commande du dispositif de vanne de commande de la remorque.

2. Système électronique de freinage suivant la revendication 1, **caractérisé en ce que** le dispositif (10) de vanne de test et le dispositif (20) de vanne de frein de maintien en ligne sont respectivement des vannes 3/2 voies pouvant être commandées électriquement et ayant un rappel par ressort.

3. Système électronique de freinage suivant la revendication 2, **caractérisé en ce que** le dispositif (20) de vanne de frein de maintien en ligne se trouve, lorsqu'il n'est pas alimenté en courant, dans son premier état de commutation.

4. Système électronique de freinage suivant l'une des revendications précédentes, **caractérisé en ce qu'**en aval et en série avec le dispositif (20) de vanne de frein de maintien en ligne est montée une vanne (22) d'arrêt 2/2 voies à rappel par ressort, qui, dans un premier état de commutation, achemine la pression de commande mise à disposition par le dispositif (10) de vanne de test et par le dispositif (20) de vanne de frein de maintient en ligne à l'entrée (12) pneumatique de commande du dispositif (14) de vanne de commande de remorque et, dans un deuxième état de commutation, arrête la pression à l'entrée de commande du dispositif de vanne de commande de la remorque.

5. Système électronique de freinage suivant la revendication 2, **caractérisé en ce que** la vanne (22) d'arrêt 2/2 voies peut être commandée électriquement et, lorsqu'elle n'est pas alimentée en courant, se trouve dans son premier état de commutation.

6. Système électronique de freinage suivant l'une des revendications précédentes, **caractérisé en ce qu'**il est prévu une unité (24) électrique de commande manuelle, dans lequel
- dans un premier état de commutation de l'unité (24) de commande manuelle, des cylindres (16, 18) à ressort accumulateur du véhicule de traction et de l'entrée (12) de commande du dispositif (14) de vanne de commande de la remorque sont purgés,
- dans un deuxième état de commutation de l'unité (24) de commande manuelle, les cylindres (16, 18) à ressort accumulateur du véhicule de traction sont purgés et l'entrée (12) de commande du dispositif (14) de vanne à commande de la remorque est alimentée en air et
- dans une troisième position de commutation de l'unité (24) de commande manuelle, les cylindres (16, 18) à ressort accumulateur du véhicule de traction sont alimentés en air et l'entrée (12) de commande du dispositif (14) de vanne de commande de la remorque est purgée.

7. Système électronique de freinage suivant la revendication 6, **caractérisé en ce que** la troisième position de commutation a un spectre discret ou continu de positions de commutation subordonnées, le niveau de pression de l'entrée (12) de commande du dispositif (14) de vanne de commande de la remorque dépendant du choix d'une position de commutation subordonnée.

8. Système électronique de freinage suivant la revendication 6 ou 7, **caractérisé en ce que** la durée de la prise de la troisième position de commutation influence le niveau de pression de l'entrée (12) de commande du dispositif (14) de vanne de commande de la remorque.

9. Procédé de commande et/ou de réglage d'un système électronique de freinage pour un véhicule utilitaire ayant un système pneumatique de freinage et un véhicule de traction ainsi qu'une remorque, comprenant un dispositif de vanne de test, qui peut être commandé électriquement et qui, pour effectuer un test de freinage, alimente en air une entrée de commande pneumatique d'un dispositif de vanne de commande de remorque, alors que les cylindres à ressort accumulateur du véhicule de traction sont purgés, **caractérisé en ce qu'**il est monté en aval en série du dispositif (10) de vanne de test un dispositif (20) de vanne de frein de maintien en ligne, qui peut être commandé électriquement et qui, dans un premier état de commutation, achemine une pression de commande mise à disposition par le dispositif de vanne de test vers l'entrée (12) de pneumatique de commande du dispositif (14) de vanne de commande de remorque et, dans un deuxième état de commutation, purge l'entrée de commande du dispositif de vanne de commande de la remorque.

10. Procédé suivant la revendication 9, **caractérisé en ce que** le dispositif (10) de vanne de test et le dispositif (20) de vanne de frein de maintien en ligne sont respectivement des vannes 3/2 voies pouvant être commandées électriquement et ayant un rappel par ressort.

11. Procédé suivant la revendication 10, **caractérisé en ce que** le dispositif (20) de vanne de frein de maintien en ligne se trouve, lorsqu'il n'est pas alimenté en courant, dans son premier état de commutation.

12. Procédé suivant l'une des revendications 9 à 11, **caractérisé en ce qu'**en aval et en série avec le dispositif (20) de vanne de frein de maintien en ligne est montée une vanne (22) d'arrêt 2/2 voies à rappel par ressort, qui, dans un premier état de commutation, achemine la pression de commande mise à disposition par le dispositif (10) de vanne de test et par le dispositif (20) de vanne de frein de maintient en ligne à l'entrée (12) pneumatique de commande du dispositif (14) de vanne de commande de remorque et, dans un deuxième état de commutation, arrête la pression à l'entrée de commande du dispositif de vanne de commande de la remorque.

13. Procédé suivant la revendication 12, **caractérisé en ce que** la vanne (22) d'arrêt 2/2 voies peut être commandée électriquement et, lorsqu'elle n'est pas alimentée en courant, se trouve dans son premier état de commutation.

14. Procédé suivant l'une des revendications précédentes 9 à 13, **caractérisé en ce que** le système électronique de freinage est commandé par une unité (24) électrique de commande manuelle, dans lequel
- dans un premier état de commutation de l'unité (24) de commande manuelle, des cylindres (16, 18) à ressort accumulateur du véhicule de traction et de l'entrée (12) de commande du dispositif (14) de vanne de commande de la remorque sont purgés,
- dans un deuxième état de commutation de l'unité (24) de commande manuelle, les cylindres (16, 18) à ressort accumulateur du véhicule de traction sont purgés et l'entrée (12) de commande du dispositif (14) de vanne de commande de la remorque est alimentée en air et
- dans une troisième position de commutation de l'unité (24) de commande manuelle, les cylindres (16, 18) à ressort accumulateur du véhicule de traction sont alimentés en air et l'entrée (12) de commande du dispositif (14) de vanne de commande de la remorque est purgée.

15. Procédé suivant la revendication 14, **caractérisé en ce que** la troisième position de commutation a un spectre discret ou continu de positions de commutation subordonnées, le niveau de pression de l'entrée (12) de commande du dispositif (14) de vanne de commande de la remorque dépendant du choix d'une position de commutation subordonnée.

16. Procédé suivant la revendication 14 ou 15, **caractérisé en ce que** la durée de la prise de la troisième position de commutation influence le niveau de pression de l'entrée (12) de commande du dispositif (14) de vanne de commande de la remorque.
